# FASCICULE DE BREVET EUROPEEN

(11) **EP 1 013 401 B1**
(45) Date de publication et mention de la délivrance du brevet: **03.03.2004**
(21) Numéro de dépôt: 99403251.4
(22) Date de dépôt: 22.12.1999
(51) Int. Cl.: B29C 47/04, B65D 75/58, B65B 61/18

(54) **Procédé de fabrication d'un emballage comprenant des moyens d'ouverture perfectionnés et emballage selon ce procédé**
Verfahren zur Herstellung von Verpackung mit Öffnungsvorrichtung und Verpackung nach diesem Verfahren
Process of manufacturing container with opening feature and container according to this process

(30) Priorité: 23.12.1998 FR 9816322
(43) Date de publication de la demande: 28.06.2000
(73) Titulaire: Flexico-France, 60119 Hénonville (FR)
(72) Inventeur: Bois, Henri Georges, 92200 Neuilly (FR)
(74) Mandataire: Texier, Christian

(56) Documents cités:
- EP-A- 0 691 266
- US-A- 3 368 740
- US-A- 3 535 409
- US-A- 4 522 854
- US-A- 5 826 401

## Description

La présente invention concerne le domaine des emballages, notamment mais non exclusivement des sachets, comprenant des profilés de fermeture complémentaires.

De nombreux emballages ou sachets comprenant de tels profilés de fermetures ont déjà été proposés.

Le document US-3535409 décrit des emballages réalisés par coextrusion d'un liseré en polyéthylène haute densité dans l'épaisseur d'une feuille de matière plastique en polyéthylène basse densité, pour générer une ligne de rupture.

Le document US-5826401 décrit différents moyens de réalisation de sachets à soufflet comportant, soit au niveau d'un soufflet de fond soit au niveau d'une embouchure une bande en U rapportée.

Le document US 3368740, qui représente l'art antérieur le plus proche, décrit un procédé de fabrication d'emballage comportant un film comprenant l'étape qui consiste à coextruder au moins avec une partie de la feuille de matériau destinée à former la paroi de l'emballage, intercalé entre deux tronçons de cette partie de feuille, un liseré générant une zone de plus faible résistance propre à former une bande d'ouverture facile sur l'emballage.

Plus précisément encore la présente invention a pour but de proposer un nouvel emballage possédant des moyens d'ouverture ' perfectionnés.

Le but précité est atteint dans le cadre de la présente invention, grâce à un procédé de fabrication d'emballage qui comprend l'étape qui consiste à coextruder au moins avec une partie de la feuille de matériau destinée à former la paroi de l'emballage, et entre deux tronçons de cette partie de feuille, un liseré de matériau dont le point de fusion ou de ramollissement est inférieur à celui du matériau composant la paroi de la feuille.

La présente invention concerne également les emballages ainsi obtenus.

D'autres caractéristiques, buts et avantages de la présente invention, apparaîtront à la lecture de la description détaillée qui va suivre, et en regard des dessins annexés, donnés à titre d'exemples non limitatifs, et sur lesquels :
- la figure 1 représente une vue schématique d'une extrudeuse tubulaire, apte à la mise en oeuvre de la présente invention,
- la figure 2 représente une vue en coupe d'une feuille extrudée conforme à une variante de mise en oeuvre de la présente invention, et
- la figure 3 représente une vue schématique en coupe d'un sachet conforme à une variante de réalisation de la présente invention.

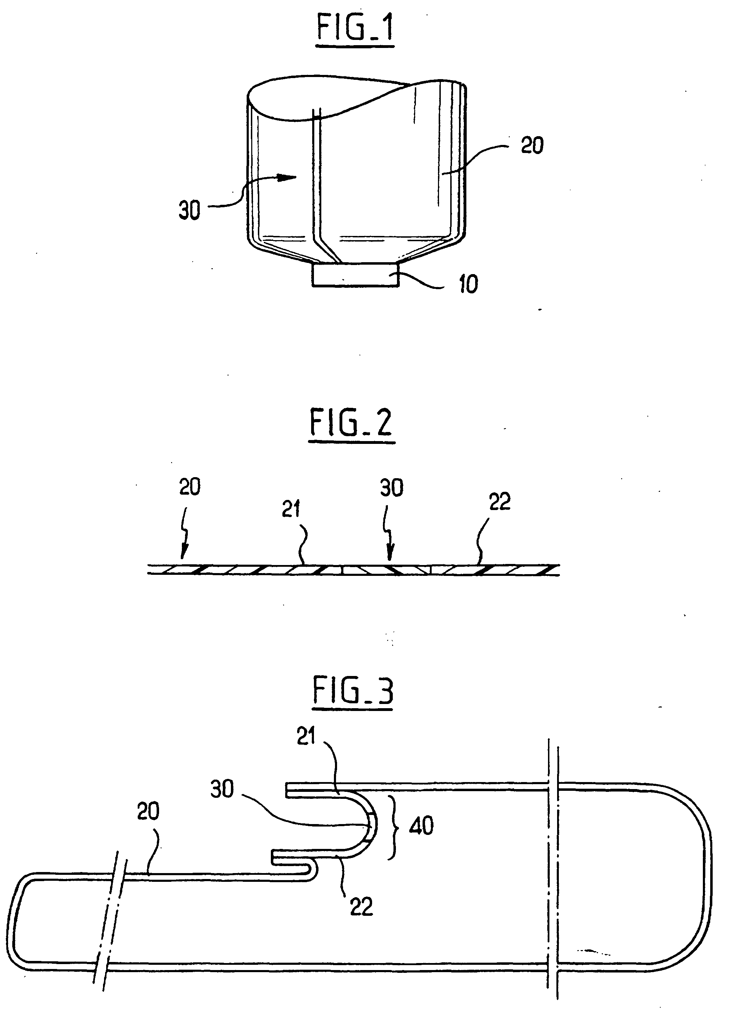

On aperçoit sur la figure 1 une extrudeuse tubulaire 10 apte à générer une feuille de contour tubulaire 20 en matière plastique conforme à la présente invention.

On notera cependant que la présente invention peut également s'appliquer à l'extrusion de feuilles planes pour la réalisation d'emballages.

Comme on l'a indiqué précédemment, selon la présente invention, l'extrudeuse 10 est adaptée pour générer un liseré longitudinal continu 30 en un matériau dont le point de fusion ou de ramollissement est inférieur à celui du matériau composant la paroi principale de la feuille 20.

A titre d'exemple non limitatif, le matériau composant le liseré 30 est de préférence formé de copolymères d'oléfines, éthylène ou propylène.

Egalement à titre d'exemple non limitatif, le matériau composant la paroi 20 est de préférence formé de polyoléfines.

Plus précisément encore comme on l'a illustré sur la figure 2, le liseré 30 est coextrudé, intercalé entre deux tronçons 21, 22 de la paroi 20. De préférence le liseré 30 a la même épaisseur que la paroi 20. Cependant cette caractéristique n'est pas impérative. On peut envisager de coextruder un liseré 30 ayant une épaisseur inférieure ou supérieure à celle de la paroi 20.

Les emballages ou sachets peuvent être réalisés selon toute technique connue de l'homme de l'art, à partir de la feuille comprenant le liseré 30 coextrudé conforme à la présente invention.

Bien entendu la présente invention n'est pas limitée au mode de réalisation particulier qui vient d'être décrit.

On notera par exemple que la présente invention n'est pas limitée à l'extrusion de liseré unique. La présente invention peut en effet être mise en oeuvre pour la coextrusion d'un film 20 et de deux liserés 30 ou plus, parallèles entre eux.

La présente invention peut également s'appliquer aux sachets dans lesquels les profilés de fermeture sont actionnés par un curseur.

La demanderesse a constaté qu'un tel liseré 30 générait une zone de plus faible résistance propre à former une bande d'ouverture facile sur l'emballage.

A titre d'exemple non limitatif, la largeur du liseré est typiquement comprise entre 0,5 et 2mm tandis que son épaisseur est typiquement comprise entre 20 et 200µm.

Par ailleurs, comme on l'a schématisé sur la figure 3, selon une variante de l'invention, le liseré 30 peut être extrudé entre deux tronçons de feuilles 21,22 de faible largeur constituant en combinaison une bande 40 susceptible d'être rapportée et fixée sur la paroi 20 du sachet selon tout moyen et toute modalité appropriés, par exemple par soudage et après pliage de cette bande en U, concavité vers l'extérieur de l'emballage, comme on le voit sur la figure 3.

Dans ce cas, l'emballage peut ne pas comporter de profilés de fermeture.

La présence de ce liseré 30 sur la bande 40 permet une ouverture facile de l'emballage, puisqu'elle définit une zone de rupture préférentielle.

Bien entendu, la présente invention n'est pas limitée à la géométrie de l'emballage illustré sur la figure 3, notamment quant aux modalités de fixation de la bande 40 sur la paroi 20 du sachet.

## Revendications

1. Procédé de fabrication d'emballage comportant un film (20), comprenant l'étape qui consiste à coextruder au moins avec une partie de la feuille (20) de matériau destinée à former la paroi de l'emballage, intercalé entre deux tronçons de cette partie de feuille (20), un liseré (30) de matériau dont le point de fusion ou de ramollissement est inférieur à celui du matériau composant la paroi principale de la feuille (20).

2. Procédé selon la revendication 1, **caractérisé par le fait que** le film (20) est muni de profilés de fermeture complémentaires.

3. Procédé selon l'une des revendications 1 ou 2, **caractérisé par le fait que** l'étape de coextrusion consiste à extruder une feuille de contour tubulaire (20) en matière plastique.

4. Procédé selon l'une des revendications 1 ou 2, **caractérisé par le fait que** l'étape de coextrusion consiste à extruder une feuille plane (20) en matière plastique.

5. Procédé selon l'une des revendications 1 ou 2, **caractérisé par le fait qu'**il comprend les étapes consistant à extruder le liseré (30) entre deux tronçons de feuilles (21, 22) constituant une bande (40) puis à rapporter et fixer cette bande sur la paroi d'un sachet.

6. Procédé selon la revendication 5, **caractérisé par le fait que** la bande (40) est pliée en U avant d'être fixée sur la paroi (20) du sachet.

7. Procédé selon l'une des revendications 1 à 6, **caractérisé par le fait que** le matériau composant le liseré (30) est formé de copolymères d'oléfines, éthylène ou propylène.

8. Procédé selon l'une des revendications 1 à 7, **caractérisé par le fait que** le matériau composant la feuille (20) est formé de polyléfines.

9. Emballage obtenu par mise en oeuvre du procédé conforme à l'une des revendications 1 à 8.

10. Emballage selon la revendication 9, **caractérisé par le fait qu'**il comporte un curseur pour l'actionnement des profilés (40) à l'ouverture, et respectivement à la fermeture.

11. Emballage selon l'une des revendications 9 ou 10, **caractérisé par le fait que** la largeur du liseré (30) est comprise entre 0,5 et 2mm.

12. Emballage selon l'une des revendications 9 à 11, **caractérisé par le fait que** l'épaisseur du liseré (30) est comprise entre 20 et 200µm.

13. Emballage selon l'une des revendications 9 à 12, **caractérisée par le fait que** le matériau composant le liseré (30) est formé de copolymères d'oléfines, éthylène ou propylène.

14. Emballage selon l'une des revendications 9 à 13, **caractérisée par le fait que** le matériau composant la feuille (20) est formé de polyoléfines.

## Patentansprüche

1. Verfahren zur Herstellung einer Verpackung, die eine Folie (20) aufweist, das den Schritt umfaßt, Coextrudieren mit wenigstens einem Teil der Folie (20) aus einem Material, das zum Herstellen der Wand der Verpackung dient, eingebettet zwischen zwei Abschnitte dieses Teils der Folie (20), einer Borte (30) aus einem Material, dessen Schmelz- oder Aufweichungspunkt kleiner als der des Materials ist, aus dem die Hauptwand der Folie (20) zusammengesetzt ist.

2. Verfahren nach Anspruch 1, **dadurch gekennzeichnet, dass** die Folie (20) mit komplementären Verschlussprofilen versehen ist.

3. Verfahren nach einem der Ansprüche 1 oder 2, **dadurch gekennzeichnet, dass** der Schritt des Coextrudierens darin besteht, eine Folie mit röhrenförmigem Umfang (20) aus Kunststoffmaterial zu extrudieren.

4. Verfahren nach einem der Ansprüche 1 oder 2, **dadurch gekennzeichnet, dass** der Schritt des Coextrudierens darin besteht, eine ebene Folie (20) aus Kunststoffmaterial zu extrudieren.

5. Verfahren nach einem der Ansprüche 1 oder 2, **dadurch gekennzeichnet, dass** es die Schritte umfasst: Extrudieren der Borte (30) zwischen zwei Abschnitten der Folien (21, 22), die einen Streifen (40) bilden, und dann Ansetzen und Befestigen dieses Streifens an der Wand eines Beutels.

6. Verfahren nach Anspruch 5, **dadurch gekennzeichnet, dass** der Streifen (40) vor der Befestigung an der Wand (20) des Beutels zu einem U geknickt wird.

7. Verfahren nach einem der Ansprüche 1 bis 6, **dadurch gekennzeichnet, dass** das Material für die Borte (30) aus Copolymeren von Olefinen, Ethylen oder Propylen besteht.

8. Verfahren nach einem der Ansprüche 1 bis 7, **dadurch gekennzeichnet, dass** das Material für die Folie (20) aus Polyolefinen besteht.

9. Verpackung, hergestellt durch Anwenden des Verfahrens nach einem der Ansprüche 1 bis 8.

10. Verpackung nach Anspruch 9, **dadurch gekennzeichnet, dass** sie einen Schieber für die Betätigung der Profile (40) für das Öffnen bzw. das Schließen umfaßt.

11. Verpackung nach einem der Ansprüche 9 oder 10, **dadurch gekennzeichnet, dass** die Breite der Borte (30) zwischen 0,5 und 2 mm liegt.

12. Verpackung nach einem der Ansprüche 9 bis 11, **dadurch gekennzeichnet, dass** die Dicke der Borte (30) zwischen 20 und 200 µm liegt.

13. Verpackung nach einem der Ansprüche 9 bis 12, **dadurch gekennzeichnet, dass** das Material für die Borte (30) aus Copolymeren von Olefinen, Ethylen oder Propylen besteht.

14. Verpackung nach einem der Ansprüche 9 bis 13, **dadurch gekennzeichnet, dass** das Material für die Folie (20) aus Polyolefinen besteht.

## Claims

1. Process for manufacturing a package comprising a film (20), which includes a step consisting in coextruding at least with a part of the sheet (20) of material intended to form the wall of the package, inserted between two portions of this part of the sheet (20), a border (30) of material whose melting or softening point is below that of the material making up the main wall of the sheet (20).

2. Process according to Claim 1, **characterized in that** the film (20) is provided with complementary profiled closure strips.

3. Process according to either of Claims 1 and 2, **characterized in that** the coextrusion step consists in extruding a plastic sheet (20) of tubular outline.

4. Process according to either of Claims 1 and 2, **characterized in that** the coextrusion step consists in extruding a flat plastic sheet (20).

5. Process according to either of Claims 1 and 2, **characterized in that** it includes the steps consisting in extruding the border (30) between two sheet portions (21, 22) constituting a band (40) and then in adding and fastening this band to the wall of a sachet.

6. Process according to Claim 5, **characterized in that** the band (40) is folded into a U before being fastened to the wall (20) of the sachet.

7. Process according to one of Claims 1 to 6, **characterized in that** the material of which the border (30) is composed is formed from olefin - ethylene or propylene - copolymers.

8. Process according to one of Claims 1 to 7, **characterized in that** the material of which the sheet (20) is composed is formed from polyolefins.

9. Package obtained by implementing the process according to one of Claims 1 to 8.

10. Package according to Claim 9, **characterized in that** it includes a cursor for actuating the profiled strips (40) for opening and closing respectively.

11. Package according to either of Claims 9 and 10, **characterized in that** the width of the border (30) is between 0.5 and 2 mm.

12. Package according to one of Claims 9 to 11, **characterized in that** the thickness of the border (30) is between 20 and 200 µm.

13. Package according to one of Claims 9 to 12, **characterized in that** the material of which the border (30) is composed is formed from olefin - ethylene or propylene - copolymers.

14. Package according to one of Claims 9 to 13, **characterized in that** the material of which the sheet (20) is composed is formed from polyolefins.
